# EUROPEAN PATENT APPLICATION

(11) **EP 4 571 993 A1**
(43) Date of publication of application: **18.06.2025**
(21) Application number: 23216847.6
(22) Date of filing: 14.12.2023
(51) Int. Cl.: H01M 50/528, H01M 50/531, H01M 50/533, H01M 50/536

(54) **METHOD OF ATTACHING AND ELECTRICALLY CONNECTING A CONTACT LEAD TO AT LEAST ONE FOIL**

(71) Applicant: CUSTOMCELLS Holding GmbH, 25524 Itzehoe (DE)
(72) Inventor: Schlosser, Anja, Itzehoe (DE)
(74) Representative: LKGLOBAL Lorenz & Kopf Patentanwalt Attorney at Law PartG mbB

(57) **Abstract**

The present disclosure relates to a method of attaching and electrically connecting a contact lead (4) to at least one foil (1). To provide a method for quickly and easily attaching and electrically connecting a contact lead (4) to at least one foil (1), in particular a contact tab (3) of a current collector foil (1), wherein the contact tab (3) can be of any material, the method comprises:
- creating at least one opening (5) in the foil (1),
- positioning the contact lead (4) at the opening (5) such that the opening (5) on a first side of the foil (1) is at least partially covered by the contact lead (4),
- positioning a mating piece (6) at the opening (5) such that the opening (5) on a second side of the foil (1) is at least partially covered by the mating piece (6),
- welding the contact lead (4) to the mating piece (6).

## Description

### FIELD OF THE DISCLOSURE

The present disclosure relates to a method of attaching and electrically connecting a contact lead to at least one foil.

### BACKGROUND

Batteries play a critical role in modern society, powering a wide range of devices from portable electronics to electric vehicles. Rechargeable batteries, also referred to as secondary batteries, are often preferred due to their reusability. Furthermore, the shift towards renewable energy sources such as solar and wind power has increased the need for energy storage systems, making batteries an essential technology in the transition to a low-carbon economy.

A battery cell consists of two electrodes and a separator that separates the electrodes from each other. Battery electrodes are conductive components that serve as the positive and negative terminals in a battery. Between the two electrodes is an ion-conducting electrolyte which ensures a high ion flow between the electrodes.

A negative electrode, or anode, is usually a foil or sheet component having a lower potential, in particular a lower potential than a positive electrode or cathode. A positive electrode, or cathode, is usually a foil or sheet component having a higher potential, in particular a higher potential than a negative electrode or anode. Secondary batteries are based on the principle of moving metal ions as charge carriers from a cathode to an anode and vice versa.

An electrode typically features a current collector and a contact tab. A current collector is usually an electrically conductive metallic foil or sheet. A current collector foil or sheet may be made of an electron conductive material, such as e.g. graphite. Its primary function is to provide a path for electrons to travel from an external electrical circuit to the electrochemically active portion of the battery. Typically, every current collector will comprise a contact tab. A contact tab is usually a foil part of the current collector foil protruding from the electrochemically active part of the current collector. A contact tab is used to establish an electrically conductive contact between the current collector and the aforementioned external electrical circuit. The contact is usually established with an electrically conductive, metallic contact lead connected to the external electrical circuit.

A contact tab and a contact lead are connected in a way that permits a low-resistance electrical connection. Typically, this is achieved by welding the contact tab to the contact lead. Depending on the type of battery cell, the contact weld may be established by ultrasound welding, soldering, or laser welding. Other methods are also possible.

In conventional lithium-ion battery cells, the positive electrode may consist of a 12 - 25 µm thick aluminum foil as current collector, an active material like for example Lithium-Nickel-Manganese-Cobalt-Oxide (NMC), and additives. The negative electrode may consist of a 6 - 18 µm thick copper foil, which is coated with an active material like for example graphite and additives.

The increasing demand for portable electronics and electric vehicles has led to a growing need for batteries with higher energy density, longer lifespan (including number of possible charging cycles of a secondary battery), and improved safety. Due to the importance of batteries, there is a high demand to improve the efficiency and lifespan of batteries, including the battery electrodes (i. e. the anode and the cathode).

To create highly cycle-stable and rate-capable batteries, more capable electrolytes and electrode materials are required. One example for improved battery technology may be the development of magnesium sulfur batteries that use magnesium ions as charge carrier between anode and cathode to store energy. These kinds of batteries may possess magnesium metal as anode and a composite of sulfur and for example graphite as cathode. Due to the highly corrosive nature of the sulfur (i.e. of the applied cathode or electrode), the sulfur coating of the cathode (or electrode) may be applied to a graphite foil (serving as a current collector), which is less prone to corrosion. While graphite foils may increase the lifespan of the current collector (and thus of the cathode or electrode), they pose challenges regarding the contacting of the contact tab to the contact lead. One challenge is that graphite foils can neither be welded nor soldered without excessive introduction of energy.

EP2605313A1 discloses a method of connecting a lithium electrode to a contact lead in a rechargeable battery. The electrode comprises a sheet or foil of lithium or lithium alloy with a tab protruding from an edge of the sheet or foil. The contact lead comprises an electrically conductive lead with an end portion made of a second metal that does not alloy with lithium and has a plurality of through holes. The end portion of the contact lead and the tab of the electrode are positioned so that there is a substantial overlap between the end portion and the tab. The metal of the tab is then caused, for example by pressing and welding, to penetrate through the through holes of the end portion so as to join the electrode to the contact lead.

However, the proposed method requires that the tab of current collector comprises a weldable material.

### SUMMARY OF THE DISCLOSURE

Currently, it remains desirable to overcome the aforementioned problems and in particular to provide a method for quickly and easily attaching and electrically connecting a contact lead to at least one contact tab of a current collector foil, wherein the contact tab can be of any material.

Therefore, the present disclosure relates to a method of attaching and electrically connecting a contact lead to at least one foil. The method comprises:
- creating at least one opening in the foil,
- positioning the contact lead at the opening such that the opening on a first side of the foil is at least partially covered by the contact lead,
- positioning a mating piece at the opening such that the opening on a second side of the foil is at least partially covered by the mating piece,
- welding the contact lead to the mating piece.

The "foil" according to the present disclosure may have any form and may also include a "sheet". The term "foil" may denote a sheet of material that can be wound and unwound. The term "foil" may denote any kind of sheet material or other thin structures like a thin film or a thin layer or a layer assembly. The term "foil" may denote foils having any thickness and shape. The term "foil" may denote, for example, foils having a round or a rectangular shape. The "foil" may be flexible but may for example also be rigid or at least partially rigid.

The foil according to the present disclosure may be configured as an electrode of a secondary battery, comprising a current collector and comprising a contact tab. In such an example, the opening may be created in the contact tab. The foil may also be referred to as a base foil or substrate of the electrode.

The foil may comprise any material which is able to conduct an electrical current. The foil may in particular comprise graphite, aluminum, copper, magnesium, or stainless steel. Further materials or alloys thereof are also possible.

The foil may also comprise electro-spun conductive carbon fibers or glass fibers.

The contact lead and the mating piece may each comprise a material that is able to conduct an electrical current and is also able to be welded easily. This may in particular include for example aluminum or copper. Furthermore, the contact lead and/or the mating piece may additionally be coated with for example nickel or other materials. The contact lead and the mating piece may consist of an identical material.

The contact lead and the mating piece may be one single piece. The contact lead and the mating piece may be designed in a U-shape so that the contact lead may be positioned on a first side of the foil and the mating piece on a second side of the foil. Other shapes, such as for example an omega shape, are also possible. The contact lead and the mating piece may also clamp the foil.

The opening according to the present disclosure may take any shape. In one simple and effective example, the opening may be a hole of rectangular shape. A rectangular shape may be desirable as the shape of the welding area within an ultrasound welding process typically has a rectangular shape.

The contact lead can be welded to the mating piece by ultrasound welding. Ultrasound welding may be a good process as it is energy efficient and different materials can be joined. Ultrasound welding is considered highly reliable, precise, and repeatable. Furthermore, ultrasound welding processes do not require a lot of room adjacent to the welding area and also require very short weld times.

The contact lead can also be welded to the mating piece by laser welding. Laser welding has very short weld times and is thus suited to high productivity and automated environments. Furthermore, heat input can not only be applied to the surface of the welding material but may also be applied through the thickness of the materials.

By positioning the contact lead at the opening such that the opening on a first side of the foil is at least partially covered by the contact lead and positioning a mating piece at the opening such that the opening on a second side of the foil is at least partially covered by the mating piece, the welding of the contact lead to the mating piece results in an interlocking connection, or form-fit connection, of the contact lead and the foil. Insofar, the welding of the contact lead and the mating piece is conducted "through" the opening of the foil. This connection may also introduce a clamping force from the contact lead and the mating piece onto the foil, thus resulting in higher mechanical stability of the connection.

By providing such a method, a contact lead can be connected to a foil that cannot be welded, for example, a graphite foil of a current collector. In particular, a connection between a contact tab and a contact lead can be established that has a low electrical resistance and can yet withstand mechanical stress.

Furthermore, by providing such a method, a contact lead can be connected to a foil with low energy consumption, short weld times, and low process complexity.

In one example, multiple openings may be created in the foil. These multiple openings may be aligned in a symmetrical or non-symmetrical pattern and may have a uniform shape or may each have a different shape. Creating multiple openings may also improve the electrical contact. With multiple openings in the foil, a larger contact surface can be established and thus the electrical resistance can be reduced. With improved electrical contact, higher electrical currents are attainable.

The contact lead may be positioned at the opening in such a manner, that the opening on the first side of the foil is completely covered by the contact lead. Furthermore, the mating piece may be positioned at the opening in such a manner, that the opening on a second side of the foil is completely covered by the mating piece. Positioning the contact lead and/or the mating piece in such a way may improve the mechanical stability and also the electrical contact of the connection.

In one example, the opening may be obtained by cutting the foil, optionally in a manufacturing stage of the foil, where a tab of the electrode is prepared, and/or the opening may be a through hole in the foil or a cutout on an edge of the foil.

The cutting of the foil may for example be carried out through a punching process. In an example where the tab is the contact tab of an electrode, a specific punching tool may be used that has punching edges not only for creating the opening or the openings in the contact tab but also for cutting the outer shape and form of the contact tab. In this way, the opening as well as the form of the tab may be achieved in a single efficient, and repeatable process.

The cutting of the foil may also be carried out using a laser cutting process.

The opening may be obtained by cutting the foil in a manufacturing stage of a manufacturing process of the foil. Said manufacturing process may in particular be a manufacturing process of an electrode of a battery cell.

Generally, an exemplary manufacturing process may comprise at least one, optionally all, of the following steps: a mixing stage for preparing an electrode slurry, a coating stage for coating and drying the electrode slurry on a current collector foil for obtaining an electrode tape, a slitting stage for longitudinally cutting the electrode tape to a predefined site and preparing a contact tab and an electrode separation stage for separating the electrode tape into the set of electrodes.

A manufacturing stage for cutting the foil and obtaining the opening may be the slitting stage for longitudinally cutting the electrode tape to a predefined site and preparing a contact tab.

The opening may be a cutout on an edge of the foil. For example, an opening may comprise a U-shaped cutout on one or both side edges of the contact tab of an electrode. In such an example, the contact lead may be positioned at the opening in such a manner, that one side of the contact tab is completely covered by the contact lead and the mating piece may be positioned at the opening in such a manner, that the other side of the contact tab is completely covered by the mating piece. Positioning the contact lead and the mating piece in such a way may improve the mechanical stability and also the electrical contact of the connection.

In one example, after welding, the contact lead and/or the mating piece may protrude into the opening such that the contact lead and the mating piece are welded together. In such an example, the welding of the contact lead to the mating piece results in an interlocking connection, or form-fit connection, of the contact lead and the foil. Due to the contact lead and/or the mating piece protruding into the opening, the welding of the contact lead and the mating piece is conducted "through" the opening of the foil. This connection may also introduce a clamping force from the contact lead and the mating piece onto the foil, thus resulting in higher mechanical stability of the connection.

In an example where multiple openings are created in the foil, the contact lead and/or the mating piece may protrude into multiple, desirably all, openings such that the contact lead and the mating piece are welded together. With the contact lead and/or the mating piece protruding into several openings in the foil, a larger contact surface can be established and thus the electrical resistance can be reduced. With improved electrical contact, higher electrical currents are attainable.

The contact lead and/or the mating piece may be larger than the opening such that the contact lead and/or the mating piece covers the opening and a part of the foil surrounding the opening. Thus, the contact lead and/or the mating piece may overlap the opening on one or multiple, optionally all, sides of the opening. Hence, the opening may be smaller than the contact lead and/or the mating piece.

In one example, the width of the contact tab of an electrode may be 0.8 cm, the opening may be a through hole in the contact tab with a width of 0.3 cm to 0.7 cm and a length of 0.2 cm. The contact lead and/or the mating piece may for example overlap the opening by 0.1 cm on each side of the opening.

Desirably, the total overlap of contact lead and/or mating piece may amount to only a small area relative to the area of the opening. A small overlap requires less material and thus results in a more resource-efficient method.

In one example, a welding area may correspond to the size of the contact lead and/or the mating piece, the welding area being the area in which welding takes place. Hence, the welding area may be larger than the opening. In one example, the welding area may comprise the opening and a part of the foil surrounding the opening.

In an example where the opening is created in the contact tab of an electrode, the welding area may partially or completely comprise the contact tab.

Welding the contact lead to the mating piece may comprise ultrasound welding, and/or the contact lead and/or the mating piece may be of a weldable material. Ultrasound welding may be a good process as it is energy efficient and different materials can be joined. Ultrasound welding is considered highly reliable, precise, and repeatable. Furthermore, ultrasound welding processes do not require a lot of room adjacent to the welding area and also require only very short weld times.

Desirably, the contact lead and the mating piece may consist of the same material. The contact lead and the mating piece may comprise a material that is able to conduct an electrical current and is also able to be welded easily. This may in particular include for example aluminum or copper. Furthermore, the contact lead and/or the mating piece may additionally be coated with for example nickel or other materials.

The foil may be clamped by the contact lead and the mating piece. The clamping force from the contact lead and the mating piece onto the foil may result in higher mechanical stability of the connection of the foil with the contact lead and/or the mating piece. In particular, the clamping force may act on an area of the foil that surrounds the opening, for example directly adjacent to the opening.

The foil may be a non-weldable foil, optionally made of or comprising graphite.

The foil may also comprise for example electro spun conductive carbon fibers or glass fibers.

An exemplary method may also comprise, after welding: applying silver conductive lacquer to an area of the foil including the opening. The silver conductive lacquer may also be applied to an area of the contact tab and/or the mating piece. Outside of the welding area, the silver conductive lacquer may also be applied before welding.

By applying silver conductive lacquer, the electrical connection between the foil and the contact lead and/or the mating piece can be improved. In particular, the electrical resistance of the connection can be reduced.

Silver conductive lacquer may generally be used to improve electrical conductivity. It may be sprayed, printed, or brushed onto the envisaged surface. It may also be otherwise applied. In one example, a conductive lacquer may be applied that comprises conductive pigments other than silver, for example, copper, nickel, or various forms of carbon. These pigments may be suspended as particles or dissolved in a solution.

The foil may be a substrate foil of an electrode of an energy storage device. The (substrate) foil may serve as a current collector.

The energy storage device may be a secondary battery. The energy storage device may comprise one or multiple battery cells, in particular one or multiple pouch cells. Optionally, the pouch cells may be low-capacity pouch cells.

Each battery cell of the secondary batter may comprise an electrode, the electrode comprising a substrate foil, and a contact tab. In such an example, the opening may be created in the contact tab. The foil may also be referred to as a base foil, current collector, or substrate of the electrode.

A substrate foil may be made of aluminum or copper. It may also be made of other materials that are difficult to weld, for example graphite. It may furthermore be coated with an active material like for example Lithium-Nickel- Manganese-Cobalt-Oxide (NMC).

A substrate foil may also be made of nickel and may be coated with a blend of sulfur and graphite.

In one example, the opening may be located in a foil tab protruding from an edge of the foil. Such a tab may be a contact tab of an electrode of a secondary battery. A contact tab may typically be a foil part of the current collector and protrude from the electrochemically active part of the current collector. A contact tab is used to establish an electrically conductive contact of the current collector to an external electrical circuit.

In such an example, the contact may be established with an electrically conductive, metallic contact lead connected to the external electrical circuit. The contact tab and the contact lead are connected in a way that permits a low-resistance electrical connection.

In one example, the at least one foil may comprise a stack of foils, wherein the method comprises:
- creating an opening in the stack of foils,
- positioning the contact lead at the opening such that the opening on a first side of the stack is at least partially covered by the contact lead,
- positioning a mating piece at the opening such that the opening on a second side of the stack is at least partially covered by the mating piece,
- welding the contact lead to the mating piece.

In such an example, multiple or all foils of the stack of foils may be identical and aligned on top of one another, so that the created opening extends through all foils. Insofar, each foil of the stack of foils may have a respective opening in the same area of the respective foil, so that the openings align when stacked.

By aligning all foils of a stack of foils so that the created opening extends through all foils, multiple foils on top of each other can be welded together using only one contact lead and mating piece. Hence, a simple production process may be attained and excessive thickening of the connector, i. e. excessive thickening of the connection of the contact tabs and the contact leads, may be avoided. For example, in the case of a foil thickness of 20 µm, at least 10 foils can be welded together per ultrasound welding.

The present disclosure further relates to a connector for electrically connecting a foil, comprising:
- a contact lead configured to be positioned at an opening located in the foil, such that the opening on a first side of the foil is at least partially covered by the contact lead,
- a mating piece positioned at the opening such that the opening on a second side of the foil is at least partially covered by the mating piece, wherein
the contact lead is welded to the mating piece.

An exemplary connector may be used to connect an electrode of a secondary battery to an external electrical circuit. In particular, a connector may contact the contact tab, comprising the opening, of an electrode. Such a contact may be established in a way that permits a low-resistance electrical connection. Typically, this is achieved by welding the contact tab to the contact lead by ultrasound welding, soldering, or laser welding. Other methods are also possible.

The contact lead and the mating piece may be one single piece. The contact lead and the mating piece may be designed in a U-shape so that the contact lead may be positioned on a first side of the foil and the mating piece on a second side of the foil. Other shapes, such as for example an omega shape, are also possible. The contact lead and the mating piece may also clamp the foil.

In one example, the foil may comprise multiple foils stacked on top of one another. Thus, multiple foils can be welded together using only one connector. Hence, a simple production process may be attained, and excessive thickening caused by multiple connectors stacked on top of one another may be avoided.

The present disclosure further relates to an energy storage device comprising:
an electrode including a foil with an opening, and
a connector as described above.

One example of an energy storage device may be a battery cell or a supercapacitor. In particular, an energy storage device may be a secondary battery.

One example of a foil may be an electrode comprising a current collector and a contact tab. A current collector may take the form of a sheet, in particular in the shape of a square or rectangle. A foil may comprise of aluminum, magnesium, or copper. A foil may in particular comprise graphite. A contact tab may protrude from one edge of the respective current collector.

A connector may be used to connect the electrode of the energy storage device to an external electrical circuit. In particular, a connector may contact the contact tab, comprising the opening, of an electrode. Such a contact may be established in a way that permits a low-resistance electrical connection.

The present disclosure further relates to an apparatus for attaching and electrically connecting a contact lead to a foil, the apparatus comprising:
- a punching or cutting tool for creating an opening in the foil,
- a positioning tool
   for positioning the contact lead at the opening such that the opening on a first side of the foil is at least partially covered by the contact lead, and
   for positioning a mating piece at the opening such that the opening on a second side of the foil is at least partially covered by the mating piece,
- a welding tool for welding the contact lead to the mating piece.

Such an apparatus may in particular be used to carry out one example of the aforementioned method.

In one example, the foil may be an electrode of a secondary battery and an opening may be created in the contact tab of said electrode. The punching tool or the cutting tool may have punching edges not only for creating the opening or the openings in the contact tab but also for cutting the outer shape and form of the contact tab. In this way, the opening as well as the form of the contact tab may be manufactured in a single efficient, and repeatable process.

In one example, the cutting tool or the punching tool may create a U-shaped cut-out on one or both side edges of the contact tab of an electrode.

A positioning tool may be configured to position the contact lead at the opening in such a manner, that the opening on the first side of the foil is partially or completely covered by the contact lead. Furthermore, a positioning tool may be configured to position the mating piece at the opening in such a manner, that the opening on a second side of the foil is partially or completely covered by the mating piece. By positioning the contact lead and/or the mating piece in such a way, the welding of the contact lead to the mating piece results in an interlocking connection, or form-fit connection, of the contact lead and the foil. Insofar, the welding of the contact lead and the mating piece is conducted "through" the opening of the foil. This connection may also introduce a clamping force from the contact lead and the mating piece onto the foil, thus resulting in higher mechanical stability of the connection.

A welding tool may be an ultrasound welding tool. Ultrasound welding may be a good process as it is energy efficient and different materials can be joined. Ultrasound welding is considered highly reliable, precise, and repeatable. Furthermore, ultrasound welding processes do not require a lot of room adjacent to the welding area and also require very short weld times.

In one example, a welding tool may be a laser welding tool. Laser welding has very short weld times and is thus suited to high productivity and automated environments. Furthermore, heat input can not only be applied to the surface of the welding material but may also be applied through the thickness of the materials.

The technology provided by the present disclosure may be applied in the production of various types of batteries such as lithium-ion secondary batteries. Other compatible examples of batteries may be sodium-ion batteries, potassium-ion batteries, magnesium-ion batteries, calcium-ion batteries, magnesium-sulfur batteries, or aluminum-ion batteries. The technology provided by the present disclosure may also be applied in various types of metal ion capacitors, such as lithium-ion capacitors.

It is intended that combinations of the above-described elements and those within the specification may be made, except where otherwise contradictory.

It is to be understood that both the foregoing general description and the following detailed description are exemplary and explanatory only, are provided for illustration purposes, and are not restrictive of the disclosure, as claimed.

The accompanying drawings, which are incorporated in and constitute a part of this specification, illustrate examples of the disclosure and together with the description and serve to support and illustrate the principles thereof.

### BRIEF DESCRIPTION OF THE DRAWINGS

Fig. 1a schematically shows an example of a foil and a contact lead according to examples of the present disclosure.
Fig. 1b schematically shows a second example of a foil and a contact lead according to examples of the present disclosure.
Fig. 2a to fig. 2f schematically show steps of a method of attaching and electrically connecting a contact lead to at least one foil according to examples of the present disclosure.
Fig. 3a schematically shows a foil according to examples of the present disclosure.
Fig. 3b schematically shows an example of a typical electrode-membrane assembly.
Fig. 4a to fig. 4f schematically show examples of a foil according to examples of the present disclosure.
Fig. 5 schematically shows an example of a foil and a contact lead according to examples of the present disclosure.
Fig. 6 schematically shows an example of multiple foils and a contact lead according to examples of the present disclosure.

### DESCRIPTION OF THE DRAWINGS

Reference will now be made in detail to examples of the disclosure illustrated in the accompanying drawings. Wherever possible, the same reference numbers will be used throughout the drawings to refer to the same or like parts.

All figures show a foil 1 according to an example of the present disclosure. A foil 1 may be configured as an electrode (e.g. used for a secondary battery or a capacitor) or a substrate foil (i.e. current collector 2) of the electrode. The foil comprises a current collector 2 and a contact tab 3. The current collector 2 and the contact tab 3 may be one piece, i.e. one foil, even though they each possess their respective sign of reference or are shown with a different hatching.

The Dimensions shown in all figures may not be true to scale as each figure represents the respective example merely schematically. Foil 1, in particular a current collector 2, may be much larger, e.g. longer, than shown. Generally, a current collector 2 may be much larger, e.g. longer, than a contact tab 3.

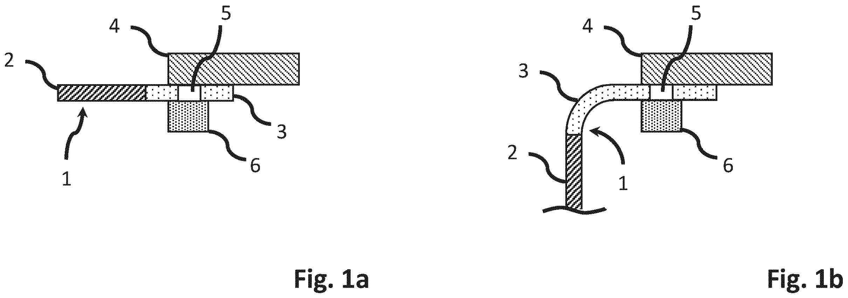

Fig. 1a schematically shows an example of a foil 1 and a contact lead 4 according to examples of the present disclosure. Fig. 1 shows a sectional view.

The foil 1 shown in fig. 1a comprises a current collector 2 and a contact tab 3. The current collector 2 and the contact tab 3 may be one piece, i.e. one foil, made from the same material. The material of the foil 1 may be a non-weldable material, like for example graphite.

The contact tab 3 shown in fig. 1a comprises an opening 5 that extends from one side of the contact tab 3 to the other side of the contact tab 3. Insofar, the opening 5 is a through hole. The opening 5 may for example be a hole of rectangular shape. A rectangular shape may be desirable as the shape of the welding area within an ultrasound welding process typically has a rectangular shape.

The contact lead 4 shown in fig. 1a is provided on one side of the foil 1, in particular of the contact tab 3, so that the contact lead 4 and the foil 1 are in contact. The contact lead 4 is positioned at the opening 5 such that the opening 5 on a first side of the foil 1 is at least partially covered by the contact lead 4. The opening 5 may be completely covered by the contact lead 4.

On the other side of the foil 1 shown in fig. 1a, a mating piece 6 is provided so that it is in contact with the foil 1, in particular with the contact tab 3. The mating piece 6 is positioned at the opening 5 such that the opening 5 on a second side of the foil 1 is at least partially covered by the mating piece 6. The opening 5 may be completely covered by the mating piece 6.

The contact lead 4 and the mating piece 6 may each comprise a material that is able to conduct an electrical current and is also able to be welded easily. This may in particular include for example aluminum or copper. The contact lead 4 and the mating piece 6 may consist of an identical material.

The contact lead 4 and/or the mating piece 6 may be larger than the opening 5 such that the contact lead 4 and/or the mating 6 piece covers the opening 5 and a part of the foil 1 surrounding the opening 5. Thus, the contact lead 4 and/or the mating piece 6 may overlap the opening 5 on one or multiple, optionally all, sides of the opening 5. Hence, the opening 5 may be smaller than the contact lead 4 and/or the mating piece 6.

The foil 1 may be a foil piece, e.g. a metal sheet with a relatively small thickness. The contact lead 4 and the mating piece 6 may also be a foil piece, e.g. a sheet, comprising a greater thickness of that of the foil 1. The foil 1, the contact lead 4 and the mating piece 6 may also all possess an identical thickness.

Fig. 1b schematically shows a second example of a foil 1 and a contact lead 4 according to examples of the present disclosure. The example of fig. 1b may principally correspond to that of fig. 1a, wherein the contact tab 3 is longer and comprises a bend.

Depending on the position of a battery cell within an energy storage system, the electrode of said battery cell may be oriented differently from the contact lead 4 of the energy storage system. For example, a battery cell, e.g. a pouch cell or a cylindrical cell, may be positioned "standing up", i.e. vertically, while a contact lead 4 is positioned horizontally, reaching for the battery cell. In such an example, the contact tab 3 of the battery cell may comprise a bend in order to be easily connectable with the horizontally positioned contact lead 4.

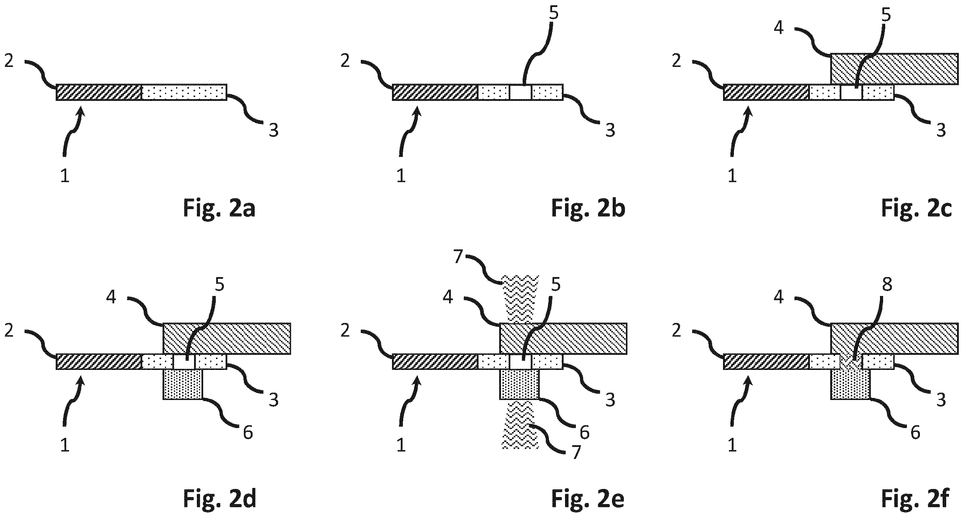

Fig. 2a to fig. 2f schematically show steps of a method of attaching and electrically connecting a contact lead 4 to at least one foil 1 according to examples of the present disclosure. Insofar, fig. 2a to fig. 2f schematically show different stages of a foil 1 and a contact lead 4 in between steps of a method of attaching and electrically connecting a contact lead 4 to at least one foil 1.

In fig. 2a a foil 1 comprising a current collector 2 and a contact tab 3 is shown, wherein the contact tab 3 and the current collector 2 are one piece. The foil 1 may be of a non-weldable material, e.g. graphite.

In fig. 2b a foil 1 generally corresponding to the example of fig. 2a is shown, wherein an opening 5 is comprised in the contact tab 3. Insofar, from fig. 2a to fig. 2b, an opening 5 is created in the foil 1.

In fig. 2c a foil 1 generally corresponding to the example of fig. 2b is shown, wherein a contact lead 4 is provided on one side of the foil 1, so that the opening 5 is at least partially covered by the contact lead 4. Insofar, from fig. 2b to fig. 2c, a contact lead 4 is positioned on one side of the foil 1.

In fig. 2d a foil 1 generally corresponding to the example of fig. 2c is shown, wherein a mating piece 6 is provided on a second side of the foil 1, so that the opening 5 is at least partially covered by the mating piece 6. Insofar, from fig. 2c to fig. 2d, a mating piece 6 is positioned on a second side of the foil 1.

In fig. 2e a foil 1 generally corresponding to the example of fig. 2d is shown, wherein a heat 7 is being applied to the contact lead 4 and the mating piece 6. The heat 7 is being applied from two directions corresponding to the first and the second side of the foil 1. Thus, the mating piece 6 and the contact lead 4 both experience said heat 7. In one example, a heat 7 may also only be applied from one side, for example heat 7 may only be applied to the contact lead 4. Heat 7 may be applied to weld together the contact lead 4 and the mating piece 6.

The welding of the contact lead 4 to the mating piece 6 may result in an interlocking connection, or form-fit connection, of the contact lead 4 and the foil 1. Insofar, the welding of the contact lead 4 and the mating piece 6 is conducted "through" the opening 5 of the foil 1. This connection may also introduce a clamping force from the contact lead 4 and the mating piece 6 onto the foil 1, thus resulting in higher mechanical stability of the connection.

The introduction of heat 7 may in particular be carried out by ultrasound welding.

In fig. 2f a foil 1 generally corresponding to the example of fig. 2e is shown, wherein the contact lead 4 and the mating piece 6 are welded together. The contact lead 4 and the mating piece 6 may protrude into the opening such that the contact lead 4 and the mating piece 6 are welded together. The mating piece 6 and the contact lead 4 may, during welding, may touch one another in a contact zone 8.

Insofar, in order to get from the stage of fig. 2a to the stage of fig. 2f, a method may have been carried out, the method comprising for example:
- creating an opening 5 in the foil 1,
- positioning the contact lead 4 at the opening 5 such that the opening 5 on a first side of the foil 1 is at least partially covered by the contact lead 4,
- positioning a mating piece 6 at the opening 5 such that the opening 5 on a second side of the foil 1 is at least partially covered by the mating piece 6,
- welding the contact lead 4 to the mating piece 6.

By carrying out such a method, a contact lead 4 can be connected to a foil 1 that cannot be welded, for example, a graphite foil 1. In particular, a connection between a contact tab 3 and a contact lead 4 can be established that has a low electrical resistance and can yet withstand mechanical stress.

Furthermore, by providing such a method, a contact lead 4 can be connected to a foil 1 with low energy consumption, short weld times, and low process complexity.

The Dimensions shown in fig. 2a to fig. 2f may not be true to scale as each figure represents the respective example merely schematically. Foil 1, in particular a current collector 2, may be much larger, e.g. longer, than shown. Generally, a current collector 2 may be much larger, e.g. longer, than a contact tab 3. Furthermore, a contact lead 4 and a mating piece 6 may possess a larger thickness than a foil 1. A contact lead 4, a mating piece 6 and a foil 1 may also possess an identical or largely an identical thickness.

All of fig. 2a to fig. 2f show a sectional view.

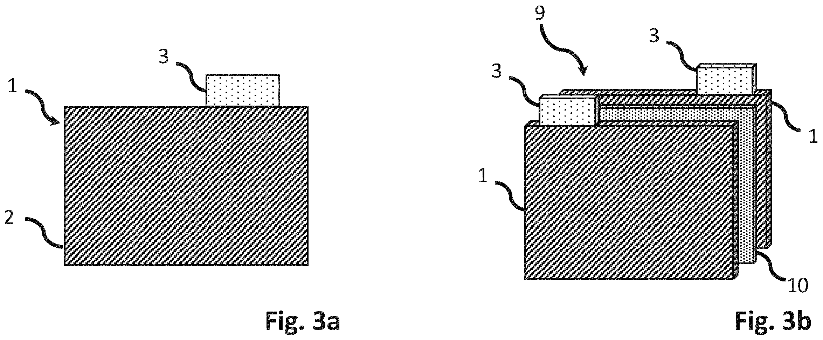

Fig. 3a schematically shows a foil 1 according to examples of the present disclosure. Fig. 3a shows a foil 1 in a top view.

The foil 1 shown in fig. 3a comprises a current collector 2 and a contact tab 3. The current collector 2 and the contact tab 3 may be one piece, i.e. one foil, made from the same material. The material of the foil 1 may be a non-weldable material, like for example graphite.

Fig. 3b schematically shows an example of a typical electrode-membrane assembly 9. Insofar, fig. 3b shows two examples of a foil 1, wherein one foil 1 may be a positive electrode (cathode) and one foil 1 may be a negative electrode (anode). In between the two foils 1, i.e. in between the cathode and the anode, is a separator membrane 10 that separates the two foils 1 from one another. A typical battery cell may usually comprise at least one such membrane-electrode-assembly 9.

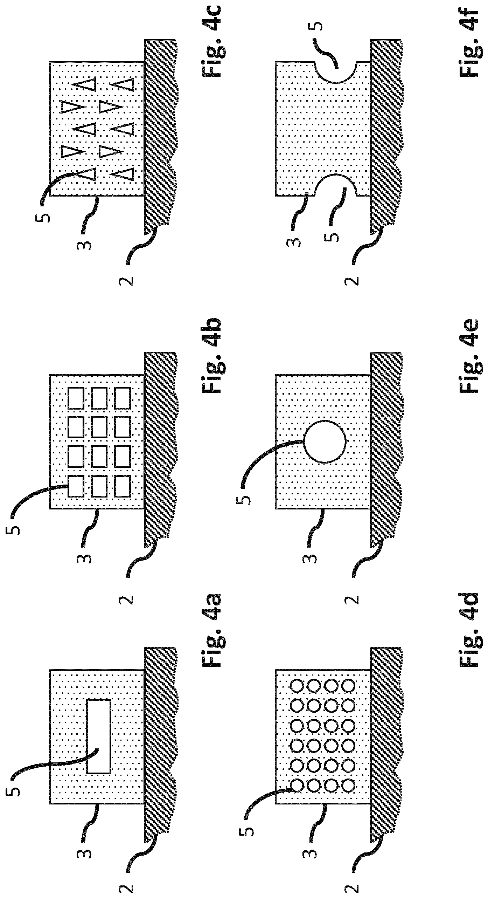

Fig. 4a to fig. 4f schematically show examples of a foil 1 according to examples of the present disclosure. In particular, fig. 4a to fig. 4f show examples of one or multiple openings 5 in a foil 1. The figures each show a section of an exemplary foil 1 in a top view, the foil 1 comprising a current collector 2 and a contact tab 3, wherein the contact tab 3 and the current collector 2 are one piece.

In fig. 4a, an example of a foil 1 is shown wherein the contact tab 3 comprises one rectangular shaped opening 5.

In fig. 4b, an example of a foil 1 is shown wherein the contact tab 3 comprises 12 rectangular shaped openings 5. The openings 5 are distributed in three rows each comprising four rectangular openings 5.

In fig. 4c, an example of a foil 1 is shown wherein the contact tab 3 comprises ten triangular shaped openings 5. The openings 5 are distributed in two rows of three openings 5 each and two further rows of two openings 5 each.

In fig. 4d, an example of a foil 1 is shown wherein the contact tab 3 comprises 24 circle shaped openings 5. The openings 5 are distributed in four rows each comprising six circle shaped openings 5.

In fig. 4b, fig. 4c and fig. 4d, multiple openings 5 are created in the foil 1. These multiple openings 5 may be aligned in a symmetrical pattern and have a uniform shape. Creating multiple openings 5 may improve the electrical contact of the contact tab 3 to the contact lead 4, the contact lead 4 not shown in the respective figures. With multiple openings 5 in the foil 1, a larger contact surface can be established and thus the electrical resistance can be reduced. With improved electrical contact, higher electrical currents are attainable.

In fig. 4e, an example of a foil 1 is shown wherein the contact tab 3 comprises one circle shaped opening 5.

In fig. 4f, an example of a foil 1 is shown wherein the contact tab 3 comprises two openings 5. Each opening 5 may be a cutout on an edge of the foil 1.

Fig. 4f shows the openings 5 comprising a U- or O-shaped cutout on both side edges of the contact tab 3 of the foil 1. In such an example, the contact lead 4, not shown in this figure, may be positioned at the openings 5 in such a manner, that one side of the contact tab 3 is completely covered by the contact lead 4 and the mating piece 6, not shown in this figure, may be positioned at the openings 5 in such a manner, that the other side of the contact tab 3 is completely covered by the mating piece 6. Positioning the contact lead 4 and the mating piece 6 in such a way may improve the mechanical stability and also the electrical contact of the connection.

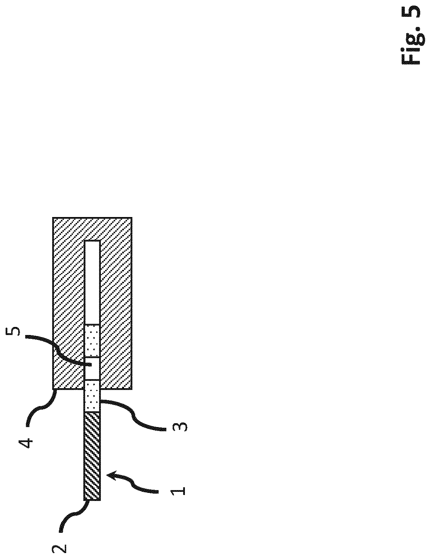

Fig. 5 schematically shows an example of a foil and a contact lead according to examples of the present disclosure in a sectional view.

The contact lead 4 and the mating piece 6 may be one single piece. The contact lead 4 and the mating piece 6 may be designed in a U-shape, shown in a sideways direction, so that the contact lead 4, i.e. the one free end of the contact lead 4, may be positioned on a first side of the foil 1 and the mating piece 6, i.e. the other free end of the contact lead 4, on a second side of the foil 1. Other shapes, such as for example an omega shape, are also possible. The contact lead 4 and the mating piece 6, i.e. the two free ends of the u-shaped contact lead 4, may also clamp the foil 1.

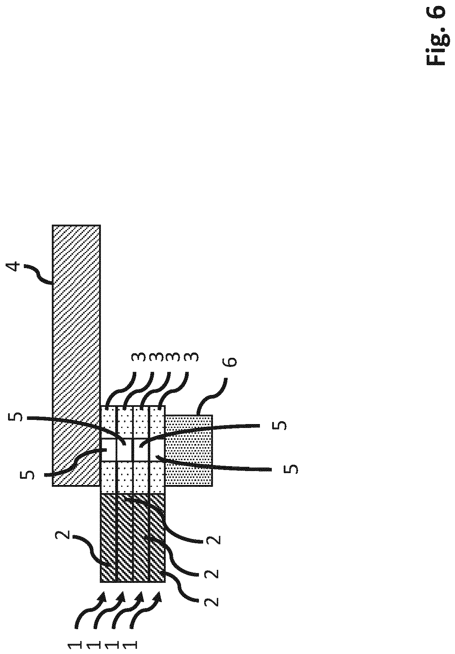

Fig. 6 schematically shows an example of multiple foils 1, i.e. a stack of foils 1, and a contact lead 4 according to examples of the present disclosure.

All foils 1 of the stack of foils 1 shown in fig. 6 are identical and aligned on top of one another, so that the created opening 5 extends through all foils 1. Insofar, each foil 1 of the stack of foils 1 has a respective opening 5 in the same area of the respective foil 1, so that the openings 5 align when stacked, as shown in fig. 6.

By aligning all foils 1 of a stack of foils 1 so that the created openings 5 align perfectly, i.e. the opening 5 extends through all foils 1, multiple foils 1 on top of each other can be welded together using only one contact lead 4 and one mating piece 6. Hence, a simple production process may be attained and excessive thickening of the connector, i. e. excessive thickening of the connection of the contact tabs 3 and the contact leads 4, may be avoided. For example, in the case of a foil thickness of 20 µm, at least 10 foils can be welded together per ultrasound welding.

Throughout the description, including the claims, the term "comprising a" should be understood as being synonymous with "comprising at least one" unless otherwise stated. In addition, any range outlined in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described regarding particular examples, it is to be understood that these examples are merely illustrative of the principles and applications of the present disclosure.

### References

- 1.: Foil
- 2.: Current collector
- 3.: Contact tab
- 4.: Contact lead
- 5.: Opening
- 6.: Mating piece
- 7.: Heat
- 8.: Contact zone
- 9.: Membrane-electrode-assembly 10.Separator membrane

## Claims

1. A method of attaching and electrically connecting a contact lead (4) to at least one foil (1), the method comprising:
- creating at least one opening (5) in the foil (1),
- positioning the contact lead (4) at the opening (5) such that the opening (5) on a first side of the foil (1) is at least partially covered by the contact lead (4),
- positioning a mating piece (6) at the opening (5) such that the opening (5) on a second side of the foil (1) is at least partially covered by the mating piece (6),
- welding the contact lead (4) to the mating piece (6).

2. The method according to claim 1, wherein
the opening (5) is obtained by cutting the foil (1), optionally in a manufacturing stage of the foil (1), where a tab (3) of the electrode is prepared, and/or
the opening (5) is a through hole in the foil (1) or a cutout on an edge of the foil (1).

3. The method according to claim 1 or 2, wherein
after welding, the contact lead (4) and/or the mating piece (6) protrude into the opening (5) such that the contact lead (4) and the mating piece (6) are welded together.

4. The method according to any one of the preceding claims, wherein
the contact lead (4) and/or the mating piece (6) is larger than the opening (5) such that the contact lead (4) and/or the mating piece (6) covers the opening (5) and a part of the foil (1) surrounding the opening (5).

5. The method according to any one of the preceding claims, wherein
a welding area corresponds to the size of the contact lead (4) and/or the mating piece (6),
the welding area being the area in which welding takes place.

6. The method according to any one of the preceding claims, wherein
welding the contact lead (4) to the mating piece (6) comprises ultrasound welding,
and/or
the contact lead (4) and/or the mating piece (6) is of a weldable material.

7. The method according to any one of the preceding claims, wherein the foil (1) is clamped by the contact lead (4) and the mating piece (6).

8. The method according to any one of the preceding claims, wherein the foil (1) is a non-weldable foil (1), optionally made of or comprising Graphite.

9. The method according to any one of the preceding claims, further comprising after welding:
applying silver conductive lacquer to an area of the foil (1) including the opening (5).

10. The method according to any one of the preceding claims, wherein
the foil (1) is a substrate foil (1) of an electrode of an energy storage device.

11. The method according to any one of the preceding claims, wherein
the opening (5) is located in a foil tab (3) protruding from an edge of the foil (1).

12. The method according to any one of the preceding claims, wherein
the at least one foil (1) comprises a stack of foils (1),
wherein the method comprises:
- creating an opening (5) in the stack of foils (1),
- positioning the contact lead (4) at the opening (5) such that the opening (5) on a first side of the stack is at least partially covered by the contact lead (4),
- positioning a mating piece (6) at the opening (5) such that the opening (5) on a second side of the stack is at least partially covered by the mating piece (6),
- welding the contact lead (4) to the mating piece (6).

13. A connector for electrically connecting a foil (1), comprising:
- a contact lead (4) configured to be positioned at an opening (5) located in the foil (1), such that the opening (5) on a first side of the foil (1) is at least partially covered by the contact lead (4),
- a mating piece (6) positioned at the opening (5) such that the opening (5) on a second side of the foil (1) is at least partially covered by the mating piece (6), wherein
the contact lead (4) is welded to the mating piece (6).

14. An energy storage device comprising:
an electrode including a foil (1) with an opening (5), and
a connector according to the preceding claim.

15. An apparatus for attaching and electrically connecting a contact lead (4) to a foil (1), the apparatus comprising:
- a punching or cutting tool for creating an opening (5) in the foil (1),
- a positioning tool
for positioning the contact lead (4) at the opening (5) such that the opening (5) on a first side of the foil (1) is at least partially covered by the contact lead (4), and
for positioning a mating piece (6) at the opening (5) such that the opening (5) on a second side of the foil (1) is at least partially covered by the mating piece (6),
- a welding tool for welding the contact lead (4) to the mating piece (6).
